(19) Europäisches Patentamt
European Patent Office
Office européen des brevets

(11) Veröffentlichungsnummer: **0 009 179**
**B1**

(12) # EUROPÄISCHE PATENTSCHRIFT

(45) Veröffentlichungstag der Patentschrift: **14.10.81**

(51) Int. Cl.³: **C 09 C 1/36,** C 09 C 3/10, C 08 K 3/22

(21) Anmeldenummer: **79103310.3**

(22) Anmeldetag: **06.09.79**

(54) **Verfahren zur Herstellung leicht dispergierbarer Titandioxidpigmente.**

(30) Priorität: **19.09.78 DE 2840637**

(43) Veröffentlichungstag der Anmeldung: **02.04.80 Patentblatt 80/7**

(45) Bekanntmachung des Hinweises auf die Patenterteilung: **14.10.81 Patentblatt 81/41**

(84) Benannte Vertragsstaaten: **BE CH DE FR GB IT LU NL**

(56) Entgegenhaltungen:
**GB-B-1 155 567**
**US-A-3 642 510**
**US-A-3 884 871**
**CHEMICAL ABSTRACTS Vol. 78, Nr. 18 May 7, 1973, page 34 Zusammenfassung 112213P Columbus, Ohio, US**
**CHEMICAL ABSTRACTS, Vol. 80, Nr. 20 May 20, 1974, Seite Zusammenfassung 109929N Columbus, Ohio, US**
**CHEMICAL ABSTRACTS, Vol. 80, Nr. 25 June 24, 1974, Seite 41, Zusammenfassung 147044C, Columbus, Ohio, US**

(73) Patentinhaber: **BAYER AG, Zentralbereich Patente, Marken und Lizenzen, D-5090 Leverkusen 1, Bayerwerk (DE)**

(72) Erfinder: **Ritter, Helmut, Dr., Bodelschwinghstrasse 16, D-4150 Krefeld (DE)**
Erfinder: **Hemmerich, Heinz-Peter. Dr., Bethelstrasse 14, D-4150 Krefeld (DE)**
Erfinder: **Rosenkranz, Hans Jürgen, Dr., Heinrich-Kauert-Weg 9, D-4150 Krefeld (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

EP 0 009 179 B1

BUNDESDRUCKEREI BERLIN

# Verfahren zur Herstellung leicht dispergierbarer Titandioxidpigmente

Gegenstand der vorliegenden Erfindung ist ein Verfahren zur organischen Nachbehandlung von Titandioxidpigmenten zur Verbesserung der Dispergierbarkeit in organischen Bindemitteln.

Eine homogene Verteilung von hydrophilen Pigmenten in flüssigen organischen Medien bereitet besonders dann große Schwierigkeiten, wenn die Oberfläche der festen Teilchen von der umgebenden Flüssigkeit nicht oder nur geringfügig benetzt wird. Für die Herstellung von pigmentierten Lacken und Kunststoffen spielt der Verteilungsgrad eine wesentliche Rolle, da die Eigenschaften der Produkte hinsichtlich des Farbtons, des Glanzes sowie der physikalischen und chemischen Verhaltensweisen sehr stark beeinflußt werden. Es ist bekannt, das die Oberfläche der zu dispergierenden Pigmente durch eine Umhüllung mit geeigneten organischen Substanzen besser benetzt wird und sich durch geringere zwischenmolekulare Kräfte auszeichnet. Voraussetzung für die Herstellung optimaler Pigmentprodukte ist jedoch, daß für hohe Anforderungen geeignete organische Materialien aufgefunden werden und diese äußerst gleichmäßig auf möglichst alle Primärteilchen aufgebracht werden. Durch Agglomeratbildung der Primärteilchen, insbesondere während der Trocknung, ist eine nachgeschaltete Umhüllung, z. B. durch Aufsprühen in der gewünschten Homogenität nicht immer gewährleistet. Die deutsche Offenlegungsschrift 1 814 569 beschreibt ein Verfahren, wonach man eine wäßrige Lösung eines Copolymeren aus Styrol und Maleinsäuremonoester auf das Titandioxidpigment aufsprüht, während das Material einer Mühle zugeführt wird. Abgesehen von dem Styrolanteil, der erfahrungsgemäß leicht zu unerwünschten Vergilbungen führen kann, ist eine homogene Umhüllung nach diesem Verfahren nur schwer zu erreichen. Die französische Patentschrift 1 427 492 beschreibt ein Verfahren zur Herstellung von Pigmentdispersionen, wobei man das zu umhüllende Material mit einer wäßrigen, verdünnten Polymerlösung, z. B. Polyacrylaten, zu einem Brei verrührt und anschließend trocknet. Nachteilig für dieses Verfahren ist, daß relativ große Mengen an Energie für die Wasserverdunstung aufgebracht werden müssen. Das US-Patent 3 642 510 beschreibt die Herstellung von leicht dispergierbaren Titandioxidpigmenten durch Zugabe von Lösungen hochmolekularer Carboxylatverbindungen zu einer Titandioxidaufschlämmung und Fixierung mittels Aluminium- oder Zinksalzen auf der Oberfläche. Obwohl eine relativ gleichmäßige Umhüllung der Titandioxidteilchen nach diesem Verfahren beschrieben wird, ist jedoch durch die Verwendung organischer Lösungsmittel der Aufwand dieses Verfahrens groß.

Die GB-Patentschrift 1 155 567 beschreibt Copolymere mit Ester- und Carbonsäuregruppen zur Beschichtung von $TiO_2$ aus alkoholischer oder wäßrig-alkoholischer Phase. Auf diese Weise behandelte Pigmente vergilben jedoch bei der in der Technik üblichen Trocknung bei 200 bis 300° C.

Ziel der vorliegenden Erfindung ist es, Titandioxidpigmente mit guten Dispergier- und optischen Eigenschaften bereitzustellen, insbesondere unter weitgehender Ausschaltung von Abluft- bzw. Abwasserbelastung durch organische Lösungsmittel bzw. durch unvollständige Aufbringung der organischen Nachbehandlungsmittel sowie unter Vermeidung kostspieliger Verfahrensschritte.

Die vorliegende Erfindung betrifft daher ein Verfahren zur homogenen Beschichtung von Titandioxidpigmenten mit organischen Polymeren, wobei eine Dispersion von Titandioxid in Wasser mit einer wäßrigen Lösung eines Carboxylgruppen enthaltenden Polymeren versetzt und das Polymere auf das Pigment aufgebracht wird, wonach das beschichtete Pigment in bekannter Weise vom wäßrigen Medium abgetrennt, gewaschen, getrocknet und gegebenenfalls gemahlen wird, das dadurch gekennzeichnet ist, daß als polymere Verbindungen solche der allgemeinen Formel

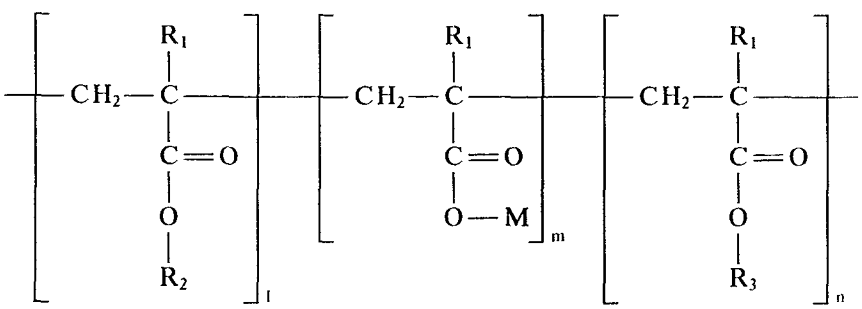

in der

$R_1$ unabhängig voneinander Wasserstoff oder Methyl;
$R_2$ Wasserstoff, Alkyl bzw. Cycloalkyl mit 1 bis 8 C-Atomen;
M Natrium-, Kaliumkationen;
$R_3$ = Alkyl bzw. Cycloalkyl mit 1—12 C-Atomen oder vorzugsweise Hydroxyalkyl, mit 2 bis 6 C-Atomen
l 1 Teil

m 0,2—1,5 Teile
n 0 oder 0,1 bis 0,5 der monomeren Mol-Anteile betragen;

in Mengen von etwa 0,05 bis 2,5 Gew.-%, vorzugsweise 0,2 bis 0,8 Gew.-%, bezogen auf Titandioxid, in schwach alkalischer wäßriger Lösung der Titandioxidaufschlämmung zugesetzt werden.

Die Herstellung der erfindungsgemäß einzusetzenden Polymeren erfolgt nach bekannten Verfahren in Masse, in organischen Lösungsmitteln oder bevorzugt nach bekannten Emulsionspolymerisationsverfahren in wäßrigem Medium unter Verwendung von Mizellbildnern wie Alkylsulfonaten und radikalischen Initiatorsystemen, wie z. B. $K_2S_2O_8$ oder das Redoxsystem $K_2S_2O_8/NaHSO_3$ bei Temperaturen von 30 bis 80°C, bevorzugt 40 bis 50°C. Zur Regelung des Molekulargewichts werden bekannte Verbindungen, wie z. B. tert. Dodecylmercaptan oder Allylalkohol bis zu 5 Gew.-% zugefügt. Die Molekulargewichte der resultierenden Polymeren bewegen sich je nach Reglermenge im Bereich von ca. 500 bis 100 000, bevorzugt werden jedoch Polymere mit einem Molekulargewicht von ca. 10 000 bis 30 000 eingesetzt. Der Feststoffgehalt des Emulsionspolymerisats beträgt je nach eingetragener Monomermenge ca. 10 bis 40 Gew.-%, bevorzugt ca. 20 bis 25 Gew.-%. Nach Verdünnen mit Wasser auf das etwa 2- bis 5fache Volumen und pH-Verschiebung durch Kalium- bzw. Natriumhydroxidzugabe auf ca. 8 bis 13, bevorzugt 10 bis 12, wird eine gießfähige wäßrige Lösung des Polymeren erhalten, welches für die Pigmentbehandlung direkt geeignet ist.

Bei besonders bevorzugten Nachbehandlungsverbindungen im Sinne der vorliegenden Erfindung hat $R_2$ der allgemeinen Formel die Bedeutung eines Alkylrestes mit 1—6 C-Atomen, während $R_3$ die Bedeutung eines Alkylrestes mit 1—12 C-Atomen sowie eines Hydroxyalkylrestes mit 2 bis 3 C-Atomen annimmt. Als dritte Monomerkomponente, mit dem Anteil »n« in der allgemeinen Formel gekennzeichnet, wird handelsübliche äthoxylierte bzw. propoxylierte (Meth)-Acrylsäure verwendet. Ganz besonders geeignet ist ein Copolymerisat aus Butylacrylat (50—80 Gew.-%) und Methacrylsäure (50—20 Gew.-%).

Durch Dispergieren des zu behandelnden Titandioxidpigmentes in Wasser wird während des Rührens eine homogene Maische erhalten, in der die Titandioxidpartikel in relativ fein verteilter Form vorliegen. Der Feststoffgehalt der Maische kann zwischen etwa 10 bis 60 Gew.-% eingestellt werden, bevorzugt zwischen 15 und 30 Gew.-%. Die wäßrige Lösung des Polymeren wird der Titandioxiddispersion langsam zugegeben. Der Gehalt an Polymeren, bezogen auf Titandioxid, beträgt 0,05 bis 2,5 Gew.-%, bevorzugt 0,2 bis 0,8 Gew.-%, besonders bevorzugt 0,3 bis 0,5 Gew.-%.

Nach Filtration und intensivem Nachwaschen mit entsalztem Wasser wird das Produkt bei ca. 150 bis 230°C, wie im normalen Fabrikationsprozeß üblich, getrocknet und vorzugsweise einer Dampfmühle zugeführt. Die nach dem erfindungsgemäßen Verfahren erhaltenen Pigmentprodukte lassen sich in organischen Bindemitteln sehr leicht dispergieren und zeigen sehr gute optische Eigenschaften.

Nachfolgend wird das erfindungsgemäße Verfahren beispielhaft erläutert:

## 1) Herstellung der organischen Nachbehandlungssubstanzen

a) 0,8 g $NaHSO_3$ (40%ige wäßrige Lösung) und 1,5 g $C_{18}$-Alkylsulfonat werden in 250 ml Wasser vorgegeben. Unter $O_2$-Ausschluß wird bei 40°C eine Mischung 25 g Methacrylsäure, 55 g Butylacrylat und 20 g 2-Hydroxyproylmethacrylat langsam über einen Zeitraum von 1 bis 2 Stunden zugetropft. Gleichzeitig wird eine Lösung von 0,5 g $K_2S_2O_8$ in 50 ml Wasser portionsweise während ca. 2 Stunden zugegeben. Nach beendeter Polymerisation wird ein Latex mit einem Feststoffgehalt von 25% erhalten. Durch Zugabe von verdünnter Natronlauge entsteht eine viskose Lösung.

b) 0,8 g $NaHSO_3$ (40%ige wäßrige Lösung), 1 g Alkylsulfonat und 0,3 g Dodecylmercaptan werden in 250 ml Wasser vorgelegt. Unter Stickstoff wird eine Monomermischung aus 30 g Methacrylsäure und 70 g Butylacrylat langsam zugetropft. Gleichzeitig wird portionsweise 0,5 g $K_2S_2O_8$ in 100 ml Wasser zugegeben. Der Feststoffgehalt des alkalisch löslichen Latex beträgt 21%.

c) Eine Monomermischung aus 30 g Methacrylsäure und 70 g Methacrylsäuremethylester wird in wäßriger Phase analog Beispiel 1b polymerisiert. Das resultierende Polymerisat ist in alkalisch wäßrigem Medium löslich.

d) 1 g Alkylsulfonat und 0,6 g tert.-Dodecylmercaptan werden in 250 ml Wasser vorgelegt. Unter Stickstoff wird eine Monomermischung aus 40 g Methacrylsäure und 60 g Butylacrylat bei 70—80°C zugetropft. Gleichzeitig wird 0,8 g $K_2S_2O_8$ in 100 ml Wasser portionsweise zugegeben. Der Feststoffgehalt beträgt nach beendeter Polymerisation 22%.

## 2) Pigmentnachbehandlung

a) 100 g $TiO_2$-Pigment, das der üblichen anorganischen Nachbehandlung mit $Al_2O_3$ bzw. $SiO_2$ unterzogen ist, wird in 400 ml Wasser angemaischt. Der pH-Wert beträgt ca. $6 \pm 0,5$. Anschließend werden 1,4 g des in Beispiel 1a hergestellten Latex in wenig verdünnter Natronlauge gelöst (pH

ca. 10 bis 12) und der $TiO_2$-Maische unter Rühren langsam zugetropft. Es wird noch ca. 10 Minuten nachgerührt, filtriert, mit 1,5 l heißem Wasser (ca. 60 bis 85°C) gewaschen und schließlich getrocknet und gemahlen. Der C-Gehalt des behandelten Pigmentes beträgt 0,21%.

b) Ein erfindungsgemäß hergestelltes Polymeres aus 40% Methacrylsäure und 60% Butylacrylat (vgl. Beispiel 1b) wird in 0,30%iger Menge, bezogen auf $TiO_2$-Feststoff, entsprechend Beispiel 2a auf $TiO_2$-Pigment aufgefällt. Nach dem Wasch- und Trocknungsprozeß wird elementaranalytisch ein C-Gehalt von 0,20% gefunden, d. h. das Polymere haftet nahezu quantitativ auf der $TiO_2$-Oberfläche.

e) Die gemäß Beispiel 2 hergestellten $TiO_2$-Proben werden unter gleichen Bedingungen einer Dampfstrahlmahlung unterzogen und in Lackbindemitteln abgeprüft. Zum Vergleich wird auch ein nicht mit organischem Material behandeltes $TiO_2$-Produkt herangezogen.

Prüfung der Pigmente

Die Körnigkeit der nach dem erfindungsgemäßen Verfahren hergestellten Pigmente wird mit Hilfe eines Grindometers nach DIN 53 238 bzw. 53 203 (ASTM D-1210) geprüft. Als organisches Medium dient ein handelsübliches mittelöliges Alkydharz. Die Glanzbestimmung der pigmentierten Filme erfolgt mit Hilfe eines Reflektometers nach DIN 67 530 (ASTM D-523). Das relative Streuvermögen wird nach dem Schwarzgrundverfahren entsprechend der DIN-Vorschrift 53 164 ermittelt.

In der Tabelle 1 sind einige der ermittelten Ergebnisse zusammengefaßt:

Tabelle 1

| Beaufschlagtes Material (%) | Dispergierwert 5′ | 10′ | Glanz 20° | Helligkeit Ry | Gelbstich $R_x-R_z$ |
|---|---|---|---|---|---|
| Blindprobe (0) | 60 | 60 | 38 | 87,2 | 1,9 |
| Polym. gem. Bsp. 1a (0,36) | 25 | 20 | 68 | 88,0 | 1,0 |
| Polym. gem. Bsp. 1b (0,30) | 10 | 10 | 68 | 87,2 | 1,5 |
| Polym. gem. Bsp. 1c (0,45) | 10 | 10 | 69 | 88,6 | 1,4 |
| Polym. gem. Bsp. 1d (0,33) | 10 | <10 | 72 | 89,1 | 1,5 |

Wie aus Tabelle 1 hervorgeht, sind die mit Polymeren beschichteten $TiO_2$-Produkte gegenüber der Blindprobe durch kleinere Dispergierwerte (in µm) und verbesserten Glanz gekennzeichnet. Beide Meßgrößen deuten auf einen hohen Zerteilungsgrad der $TiO_2$-Teilchen in dem Bindemittel hin.

**Patentanspruch**

Verfahren zur homogenen Beschichtung von Titandioxidpigmenten mit organischen Polymeren, wobei eine Dispersion von Titandioxid in Wasser mit einer wäßrigen Lösung eines Carboxylgruppen enthaltenden Polymeren versetzt und das Polymer auf das Pigment aufgebracht wird, wonach das beschichtete Pigment in bekannter Weise vom wäßrigen Medium abgetrennt, gewaschen, getrocknet und gegebenenfalls gemahlen wird, dadurch gekennzeichnet, daß als polymere Verbindungen solche der allgemeinen Formel

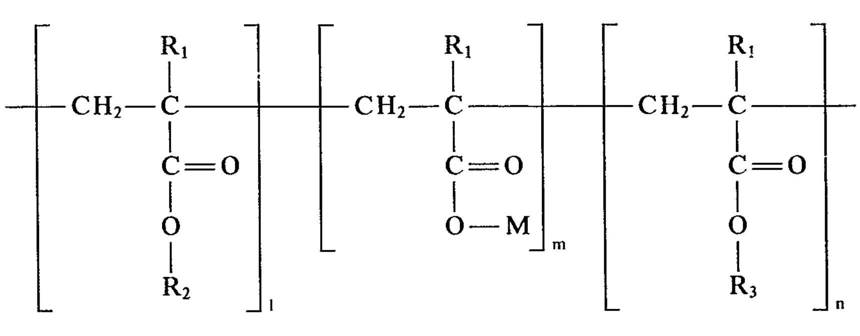

in der

- $R_1$ unabhängig voneinander Wasserstoff oder Methyl;
- $R_2$ Wasserstoff, Alkyl bzw. Cycloalkyl mit 1 bis 8 C-Atomen;
- M Natrium-, Kaliumkationen;
- $R_3$ Alkyl bzw. Cycloalkyl mit 1—12 C-Atomen oder vorzugsweise Hydroxyalkyl-, mit 2 bis 6 C-Atomen
- l 1 Teil
- m 0,2—1,5 Teile
- n 0 oder 0,1 bis 0,5 der monomeren Mol-Anteile betragen;

in Mengen von etwa 0,05 bis 2,5 Gew.-%, vorzugsweise 0,2 bis 0,8 Gew.-%, bezogen auf Titandioxid, in schwach alkalischer wäßriger Lösung der Titandioxidaufschlämmung zugesetzt werden.

**Claims**

Process for the homogeneous coating of titanium dioxide pigments with organic polymers, in which an aqueous solution of a polymer containing carboxyl groups is added to a dispersion of titanium dioxide in water and the polymer is applied to the pigment, after which the coated pigment is separated off from the aqueous medium in a known manner, washed, dried and optionally ground, characterised in that as polymeric compounds those of the general formula

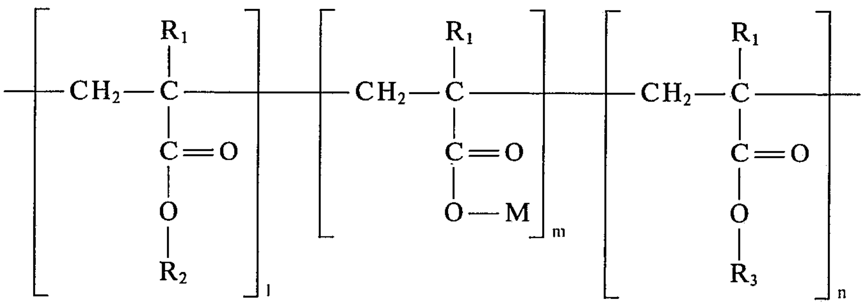

in which

- $R_1$ independently of one another represent hydrogen or methyl;
- $R_2$ represents hydrogen, alkyl or cycloalkyl with 1 to 8 C atoms;
- M represents sodium or potassium cations;
- $R_3$ represents alkyl or cycloalkyl with 1—12 C atoms or preferably hydroxyalkyl, with 2 to 6 C atoms
- l amounts to 1 part
- m amounts to 0.2—1.5 parts
- n amounts to 0 or 0.1 to 0.5 of the monomeric mole fractions;

are added to the titanium dioxide dispersion in the form of a weakly alkaline aqueous solution in amounts of about 0.05 to 2.5% by weight, preferably 0.2 to 0.8% by weight, based on the titanium dioxide.

**Revendication**

Procédé pour revêtir de manière homogène des bioxydes de titane pigmentaires par des polymères organiques dans lequel on ajoute une solution aqueuse d'un polymère contenant des groupes carboxyle à une dispersion de bioxyde de titane dans l'eau et on applique le polymère sur le pigment après quoi on sépare le pigment revêtu de manière connue en soi du milieu aqueux, on le lave, on le sèche et éventuellement on le broie, caractérisé en ce que l'on ajoute à la dispersion de bioxyde de titane des composés polymères répondant à la formule générale

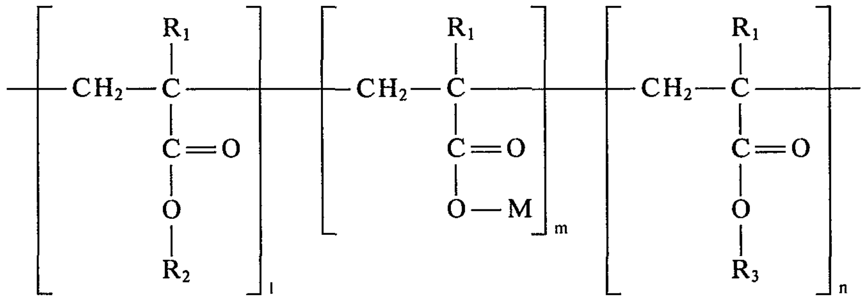

dans laquelle les symboles

$R_1$ représentent, indépendamment les uns des autres, des atomes d'hydrogène ou des groupes méthyle;
$R_2$ représente l'hydrogène, un groupe alkyle ou cycloalkyle en $C_1-C_8$;
M représente des cations sodium, potassium;
$R_3$ représente un groupe alkyle ou cycloalkyle en $C_1-C_{12}$ ou de préférence un groupe hydroxyalkyle en $C_2-C_6$;
l représente l partie;
m représente 0,2 à 1,5 partie; et
n représente 0 ou 0,1 à 0,5 des fractions molaires monomères;

en quantité d'environ 0,05 à 2,5% en poids, de préférence de 0,2 à 0,8% en poids, par rapport au bioxyde de titane, en solution aqueuse légèrement alcaline.